# EUROPÄISCHE PATENTSCHRIFT

(11) **EP 3 987 559 B1**
(45) Veröffentlichungstag und Bekanntmachung des Hinweises auf die Patenterteilung: **28.06.2023**
(21) Anmeldenummer: 20754621.9
(22) Anmeldetag: 22.07.2020
(51) Int. Cl.: H01H 9/54, H01H 71/12, H02H 3/033

(54) **SCHUTZSCHALTGERÄT, SCHUTZSCHALTSYSTEM UND VERFAHREN**
PROTECTIVE SWITCHING DEVICE, PROTECTIVE INTERRUPTING SYSTEM AND METHOD THEREFOR
DISPOSITIF DE COMMUTATEUR DE PROTECTION, SYSTÈME DE PROTECTION À INTERRUPTION ET PROCÉDÉ CORRESPONDANT

(30) Priorität: 06.09.2019 DE 102019213604
(43) Veröffentlichungstag der Anmeldung: 27.04.2022
(73) Patentinhaber: Siemens Aktiengesellschaft, 80333 München (DE)
(72) Erfinder: ERVEN, Wolfgang, 92224 Amberg (DE)
(74) Vertreter: Siemens Patent Attorneys
(86) Internationale Anmeldenummer: PCT/EP2020/070672
(87) Internationale Veröffentlichungsnummer: WO 2021/043497

(56) Entgegenhaltungen:
- DE-A1- 19 944 043
- US-A1- 2016 294 179
- US-A1- 2017 256 934
- US-A1- 2019 103 742

## Beschreibung

Die Erfindung betrifft ein Schutzschaltgerät zur Unterbrechung eines mehrere Leiter aufweisenden Niederspannungsstromkreises, ein Schutzschaltsystem zur Unterbrechung eines mehrere Leiter aufweisenden Niederspannungsstromkreises und ein Verfahren für ein Schutzschaltgerät oder Schutzschaltsystem zur Unterbrechung eines mehrere Leiter aufweisenden Niederspannungsstromkreises.

Für Niederspannungsstromkreise sind bisher verschiedene Schutzschaltgeräte bekannt.

Mit Niederspannung sind Spannungen bis 1000 Volt Wechselspannung oder 1500 Volt Gleichspannung gemeint. Mit Niederspannung sind insbesondere Spannungen gemeint, die größer als die Kleinspannung, mit Werten von 50 Volt Wechselspannung oder 120 Volt Gleichspannung sind.

Mit Stromkreisen, insbesondere für Niederspannung, sind Stromkreise für Ströme bis zu 6300 Ampere gemeint, spezieller Ströme bis zu 1600 Ampere, 1200 Ampere, 630 Ampere, 125 Ampere, 80 Ampere, 63 Ampere, 40 Ampere, 25 Ampere oder 16 Ampere. Mit den genannten Stromwerten sind insbesondere Nenn- oder/und Abschaltströme gemeint, d.h. der Strom der im Normalfall maximal über den Stromkreis geführt wird bzw. bei denen der elektrische Stromkreis üblicherweise unterbrochen wird, beispielsweise durch ein Schaltgerät oder ein Schutzschaltgerät.

Die Druckschrift US 2019/103742 A1 offenbart ein Schutzschaltgerät für einen Niederspannungsstromkreis, das dem Oberbegriff des Anspruchs 1 entspricht.

Übliche Schaltgeräte oder Schutzschaltgeräte für Niederspannungsstromkreise im Sinne der Erfindung sind beispielsweise (Last-)Trennschalter, Leistungsschalter, Fehlerstromschutzschalter bzw. Leitungsschutzschalter.

Trenner bzw. Trennschalter sind elektrische Betätigungssysteme, welche zum lastfreien (stromlosen) elektrischen Trennen von elektrischen Niederspannungsstromkreisen bzw. - anlagen(teilen) ausgebildet sind. Ein elektrisches Trennen unter Last ist mittels herkömmlicher Trenner nicht bzw. nur eingeschränkt möglich und kann aufgrund eines beim Trennen entstehenden Lichtbogens zur Zerstörung des Trenners führen.

Lasttrenner bzw. Lasttrennschalter sind elektrische Betätigungssysteme, welche zum elektrischen Trennen von elektrischen Niederspannungsstromkreisen bzw. -anlagen(teilen) unter Last ausgebildet sind. Hierfür weisen Lasttrenner beispielsweise eine Lichtbogenlöschvorrichtung auf, mittels welcher ein beim elektrischen Trennen unter Last entstehender Lichtbogen von Schaltelementen des Lasttrenners wegführbar und in einem hitzebeständigen Abschnitt der Lichtbogenlöschvorrichtung, wie z.B. einer Lichtbogenlöschkammer, löschbar ist. Auf diese Weise wird eine durch den Lichtbogen verursachte thermische Überbelastung sensibler Komponenten des Lasttrenners vermieden.

Eine besondere Ausführungsform von Trennern bzw. Lasttrennern sind sicherungsbehaftete Lasttrenner, wie Sicherungslasttrenner bzw. Sicherungslasttrennschalter. Sicherungslasttrenner sind Lasttrenner, welche eine elektrische Sicherung aufweisen, wie eine Schmelzsicherung, beispielsweise eine so genannte NH-Sicherung.

Trennschalter bzw. Lasttrennschalter werden manuell betätigt, beispielweise durch eine Handhabe, z.B. in Form eines Hebels / Handhabe, die Kontakte des Stromkreises öffnen, so dass eine galvanische Trennung, insbesondere mit einer Trennstrecke bzw. Schutzstrecke, realisiert wird. Der Hebel dient hierbei als Schaltstellungsanzeige, dass z.B. ein spannungsloser Zustand im nachgelagerten Niederspannungsstromkreis vorliegt.

Eine Unterbrechung bei Kurzschlüssen, insbesondere eine wiederholte, ist bei Trennschaltern bzw. Lasttrennschaltern nicht vorgesehen. Gleichwohl kann ist eine Einschaltung auf einen Kurzschluss bei Trennschaltern bzw. Lasttrennschaltern erlaubt.

Im Gegensatz dazu sind Leistungsschalter, Leitungsschutzschalter bzw. Fehlerstromschutzschalter bekannt. Die Unterbrechung des Stromkreises erfolgt hierbei automatisch bei Vorliegen bestimmter Überstrom-, Kurzschluss- oder Fehlerstrombedingungen. Nach einer Unterbrechung können diese Geräte wieder, relativ schnell, eingeschaltet werden. Eine manuelle Ausschaltung ist ebenfalls vorgesehen. Leistungsschalter und Leitungsschutzschalter sind Schutzschaltgeräte, die ähnlich wie eine Sicherung funktionieren. Leistungsschalter überwachen den durch sie mittels mindestens eines Leiters hindurchfließenden Strom und unterbrechen den elektrischen Strom bzw. Energiefluss zu einer Energiesenke bzw. einem Verbraucher, was als Auslösung bezeichnet wird, wenn Schutzparameter, wie Stromgrenzwerte, überschritten werden. Die Unterbrechung des Niederspannungsstromkreises erfolgt hierbei auf mechanischem Wege durch Öffnung von mechanischen Kontakten.

Die Erfindung bezieht sich auf Schaltgeräte mit einer Trennfunktion, realisiert durch ein Trennkontaktsystem. Mit Trennfunktion ist ein gewisser Mindestabstand bzw. Mindestluftstrecke zwischen den Kontakten des Trennkontaktsystem gemeint. Diese Mindestluftstrecke ist im Wesentlichen spannungsabhängig. Weitere Parameter sind der Verschmutzungsgrad, die Art des Feldes (homogen, inhomogen), und der Luftdruck bzw. die Höhe über Normalnull.

Für diese Mindestluftstrecken bzw. Kriechstrecken gibt es entsprechende Vorschriften bzw. Normen. Diese Vorschriften geben beispielsweise bei Luft für eine Stoßspannungsfestigkeit die Mindestluftstrecke für ein inhomogenes und ein homogenes (ideales) elektrisches Feld in Abhängigkeit vom Verschmutzungsgrad an. Die Stoßspannungsfestigkeit ist die Festigkeit beim Anlegen einer entsprechenden Stoßspannung. Nur bei Vorliegen dieser Mindestlänge (Mindeststrecke) weist das Trennkontaktsystem bzw. Schutzschaltgerät eine Trennfunktion (Trennereigenschaft) auf.

Im Sinne der Erfindung sind hierbei für die Trennerfunktion und deren Eigenschaften der Normenreihe DIN EN 60947 bzw. IEC 60947 einschlägig.

Sollen Halbleiterschaltelemente für Niederspannungsstromkreise eingesetzt werden, so sind jedoch weitere Sicherheitsvorkehrungen zu treffen, um eine normgerechte elektrische Anlage betreibbar zu machen. Mit Halbleiterschaltelement ist ein Bauelement gemeint, wie ein Transistor, IGBT, MOSFET, etc., über das der eigentliche Strom fließt bzw. das eigentliche Schaltelement. Mit Halbleiterschalter ist ein Halbleiterschaltelement, d.h. Bauelement, mit seiner zur Funktion üblichen bzw. notwendigen (Zusatz-)Beschaltung gemeint. D.h. es könnte beispielsweise zwei Anschlüsse für den eigentlichen Stromfluss und einen oder mehrere Anschlüsse für die Initiierung der Schaltfunktion aufweisen. Üblicherweise werden Halbleiterschalter in Kombination (Serienschaltung) mit Leistungsschaltern und (Last-)Trennschaltern konzipiert. Die Halbleiterschalter sorgen für eine schnelle Unterbrechung des Stromkreises, können allerdings keine galvanische Trennung zur Verfügung stellen, da diese im ausgeschalteten Zustand lediglich hochohmig sind.

Der Leistungsschalter dient zum Schutz bei Ausfall eines Halbleiterschalters. Der (Last-)Trennschalter wird manuell betätigt, um eine sichere Trennung, z.B. in einem Reparaturfall, zu ermöglichen. Hierzu wird dieser vor Ort ein- bzw. ausgeschaltet. Dieses Konzept ist aufwendig bzw. umständlich zu bedienen.

Aufgabe der vorliegenden Erfindung ist es, bestehende Schutzschaltgeräte bzw. Schutzschaltfunktionen zu verbessern, insbesondere ein neuartiges Schutzschaltgerät unter Einsatz moderner Halbleiterschalter mit einer Trennfunktion zur Verfügung zu stellen.

Diese Aufgabe wird durch ein Schutzschaltgerät mit den Merkmalen des Patentanspruchs 1, ein Schutzschaltsystem mit den Merkmalen des Patentanspruchs 17, Geräte für ein Schutzschaltsystem mit den Merkmalen des Patentanspruchs 20 bzw. 21 oder ein Verfahren für ein Schutzschaltgerät oder Schutzschaltsystem mit den Merkmalen des Patentanspruch 22 gelöst.

Erfindungsgemäß ist ein Schutzschaltgerät für einen mehrere Leiter aufweisenden Niederspannungsstromkreis vorgesehen, wobei das Schutzschaltgerät in einem Gehäuse aufweist:
- eingangsseitige erste Leiteranschlüsse für den Niederspannungsstromkreis, die über eine Serienschaltung eines Trennkontaktsystems und eines Halbleiterschalters mit ausgangsseitigen zweiten Leiteranschlüssen verbunden sind, wobei jeweils ein eingangsseitiger Leiteranschluss mit einem ausgangsseitigen Leiteranschluss verbunden ist, pro Verbindung (Leiter) ist ein Trennkontakt und eine Halbleiterschalterteileinheit des Halbleiterschalters vorgesehen, (die Leiteranschlüsse sind derart ausgestaltet, dass am Gehäuse Leiter des Niederspannungsstromkreises angeschlossen werden können,)
- ein Antrieb und eine am Gehäuse zugängliche (mechanische) Handhabe für das Trennkontaktsystem,
- eine (optische) Anzeigeeinheit und eine Bedieneinheit am Gehäuse,
- ein Stromsensor, der die Höhe des Stromes des Niederspannungsstromkreises ermittelt; beispielsweise können bei einem Mehrleitersystem, wie einem Dreiphasenwechselstromkreis, pro Phase ein Stromsensor vorgesehen sein,
- eine Steuereinheit, die mit dem Stromsensor(en), der Anzeigeeinheit, der Bedieneinheit, dem Antrieb des Trennkontaktsystem und dem Halbleiterschalter verbunden ist und die derart ausgestaltet ist, dass:
- bei einem Einschaltvorgang zuerst das Trennkontaktsystem geschlossen wird und anschließend der Halbleiterschalter niederohmig wird,
- bei einem manuellen ersten Ausschaltvorgang der Halbleiterschalter hochohmig wird und das Trennkontaktsystem geschlossen bleibt,
- bei einem ermittelten Strom, der einen ersten Stromschwellwert für eine erste Zeitspanne überschreitet, gemäß dem ersten Ausschaltvorgang der Halbleiterschalter hochohmig wird und das Trennkontaktsystem geschlossen bleibt,
- bei einem ermittelten Strom, der einen (höheren) zweiten Stromschwellwert für eine zweite Zeitspanne überschreitet, für einen zweiten Ausschaltvorgang der Halbleiterschalter hochohmig wird und anschließend das Trennkontaktsystem geöffnet wird,
- bei einem ermittelten Strom, der einen (noch höheren) dritten Stromschwellwert überschreitet, gemäß dem zweiten Ausschaltvorgang der Halbleiterschalter hochohmig wird und anschließend das Trennkontaktsystem geöffnet wird.

Vorteilhafterweise stellen der Halbleiterschalter und das Trennkontaktsystem, d.h. die Trennfunktion bzw. der Trenner, eine Schutzschaltgerät bzw. eine Schutzschaltsystem / Schaltgerätekombination dar, welche in der Lage ist, sowohl elektronisch mittels Halbleiterschalter und mechanisch durch den Trenner zu schalten. Erfindungsgemäß weist hierzu der Trenner, d.h. das Trennkontaktsystem, einen Antrieb auf, beispielsweise einen Motorantrieb. Der Halbleiterschalter schaltet elektronisch und das Trennkontaktsystem wird nur dann aktiviert, wenn eine sichere galvanische Trennung erforderlich ist, beispielsweise im kritischen Fehlerfall (zweiter bzw. dritter Stromgrenzwert überschritten) bzw. manuell in einem Servicefall. Eine normgerechte Anzeige der galvanischen Trennung wird durch die Handhabe gewährleistet.

Vorteilhafte Ausgestaltungen der Erfindung sind in den Unteransprüchen angegeben.

In einer vorteilhaften Ausgestaltung der Erfindung ist bei einem zweiten Ausschaltvorgang das geöffnete Trennkontaktsystem mittels einer ersten Verriegelung verriegelt.

Dies hat den besonderen Vorteil, dass das Trennkontaktsystem intern verriegelt wird und damit nicht wieder einschaltbar ist, bevor der Fehler behoben wurde bzw. damit eine klare Signalisierung dahingehend erfolgt, dass ein kritischer Fehlerfall vorliegt, so dass das Trennkontaktsystem nicht ohne weiteres wieder eingeschaltet werden kann.

In einer vorteilhaften Ausgestaltung der Erfindung kann eine Entriegelung der ersten Verriegelung des Trennkontaktsystems nur dann vorgenommen werden, wenn der Halbleiterschalter hochohmig ist.

Dies hat den besonderen Vorteil, dass ein Einschalten auf einen Strom verhindert wird, was die Sicherheit erhöht. Zudem wird bei einer Hochohmigkeit die Schaltleistung stark minimiert, was einen einfacheren Aufbau des Trennkontaktsystems ermöglicht.

In einer vorteilhaften Ausgestaltung der Erfindung verhindert bei einem Einschaltvorgang nach dem niederohmig werden des Halbleiterschalters eine zweite Verriegelung eine manuelle Öffnung des Trennkontaktsystems.

Dies hat den besonderen Vorteil, dass eine (manuelle) Trennung bei Stromfluss vermieden wird, so dass ein einfacher Aufbau des Trennkontaktsystems möglich ist.

In einer vorteilhaften Ausgestaltung der Erfindung kann eine Öffnung des Trennkontaktsystems nur dann vorgenommen werden, wenn der Halbleiterschalter hochohmig ist.

Dies hat den besonderen Vorteil, dass ein Schalten bzw. Öffnen Trennkontaktsystems unter Stromfluss, z.B. unter Erzeugung eines Lichtbogens, vermieden wird und damit wieder ein einfacher Aufbau des Trennkontaktsystems ermöglicht wird.

In einer vorteilhaften Ausgestaltung der Erfindung ist eine Differenzstromermittlung im Niederspannungsstromkreis vornehmbar. Bei einem Differenzstromwert, der einen Fehlerstromschwellwert (Differenzstromschwellwert) überschreitet, wird ein zweiter Ausschaltvorgang durchgeführt.

Dies hat den besonderen Vorteil, dass bei Vorliegen eines für Personen gefährlichen Fehlerstromes eine galvanische Trennung durchgeführt wird.

In einer vorteilhaften Ausgestaltung der Erfindung ist über die Bedieneinheit ein Ein- und Ausschaltvorgang initiierbar. Dies hat den besonderen Vorteil, dass ein Einfaches Ein- und Ausschalten ermöglicht wird.

In einer vorteilhaften Ausgestaltung der Erfindung zeigt die Anzeigeeinheit den Schaltzustand des Halbleiterschalters oder/und den Typ des Ausschaltvorganges an.

Dies hat den besonderen Vorteil, dass eine klare Visualisierung des (Schalt-)Zustandes gegeben ist.

In einer vorteilhaften Ausgestaltung der Erfindung zeigt die Handhabe den Zustand des Trennkontaktsystems an. Dies hat den besonderen Vorteil, dass eine klare Erkennung der Trennfunktion gegeben ist.

In einer vorteilhaften Ausgestaltung der Erfindung zeigt die Anzeigeeinheit auch den Zustand des Trennkontaktsystems an. Dies hat den besonderen Vorteil, dass eine integrierte Anzeige sämtlicher Zustände gegeben ist.

In einer vorteilhaften Ausgestaltung der Erfindung ist der Antrieb ein Motorantrieb oder Magnetantrieb oder weist einen Federspeicher auf.

Dies hat den besonderen Vorteil, dass das mechanische Trennkontaktsystem fernschaltfähig (remote) ist und so funktional mit dem Halbleitschalter wirken kann.

In einer vorteilhaften Ausgestaltung der Erfindung ist eine Kommunikationsschnittstelle vorgesehen. Diese ist z.B. mit der Steuereinheit verbunden.

Dies hat den besonderen Vorteil, dass eine fernbedienbare Überwachung oder Steuerung des Schutzschaltgerätes ermöglicht wird. Ferner z.B. eine Kopplung mit anderen Schutzschaltgeräten bzw. Geräten.

In einer vorteilhaften Ausgestaltung der Erfindung ist ein Spannungssensor zur Ermittlung der Höhe der Spannung des Niederspannungsstromkreises vorgesehen, der insbesondere mit der Steuereinheit verbunden ist.

Dies hat den besonderen Vorteil, dass eine weitere Schutzfunktionen, wie Überspannungs- oder Unterspannungsschutz ermöglicht werden.

In einer vorteilhaften Ausgestaltung der Erfindung ist ein Netzteil vorgesehen, dass einerseits Energie aus dem Niederspannungsstromkreis bezieht und andererseits mit der Steuereinheit verbunden ist.

Dies hat den besonderen Vorteil, dass eine Eigenversorgung des Schutzschaltgerätes gegeben ist.

In einer vorteilhaften Ausgestaltung der Erfindung ist ein Hilfsspannungsanschluss, insbesondere zur Energieversorgung der Steuereinheit, vorgesehen.

Dies hat den besonderen Vorteil, dass eine externe, von der Spannung bzw. dem Stromfluss des Niederspannungsstromkreises unabhängige, Energieversorgung des Schutzschaltgerätes und damit der Schutzfunktionen gegeben ist.

In einer vorteilhaften Ausgestaltung der Erfindung ist die Anzeigeeinheit eine optische Anzeigeeinheit, die insbesondere Lichtemitterdioden aufweist.

Dies hat den besonderen Vorteil, dass eine einfache und gute Visualisierung gegeben ist.

In einer vorteilhaften Ausgestaltung der Erfindung ist die Handhabe eine mechanische Handhabe für das Trennkontaktsystem.

Dies hat den besonderen Vorteil, dass eine einfache und optisch gut sichtbaren Realisierung der klaren Erkennung der Trennfunktion gegeben ist.

In einer vorteilhaften Ausgestaltung der Erfindung ist eine pyrotechnische Sicherung vorgesehen, die in Serie zur Serienschaltung geschaltet ist und bei einem Stromfluss, der einen vierten Stromschwellwert überschreitet und bei einem hochohmigen Schaltzustand des Halbleiterschalters, ausgelöst wird, so dass der Niederspannungsstromkreis unterbrochen wird. Dies hat den besonderen Vorteil, dass ein Schutz bei einem durchgalvanisieren des Halbleiterschalters gegeben ist, insbesondere wenn schnelle Reaktionszeiten zum Schutz notwendig sind.

Erfindungsgemäß wird ferner ein korrespondierendes Schutzschaltsystem für einen Niederspannungsstromkreis vorgeschlagen, mit dem Unterschied, dass zwei Geräte vorgesehen sind, die über eine Kommunikationsverbindung miteinander verbunden sind. Das erste Gerät weist einen Halbleiterschalter auf. Das zweite Gerät weist ein Trennkontaktsystem auf.

Das System bzw. das erste / zweite Gerät können mit einzelnen bzw. allen vorstehend bzw. nachfolgend genannten vorteilhaften Ausgestaltungen ausgestattet sein.

In einer vorteilhaften Ausgestaltung des Systems ist die Kommunikationsverbindung eine drahtgebundene Kommunikationsverbindung.

Dies hat den besonderen Vorteil, dass eine besonders sichere Verbindung gegeben ist, die eine zuverlässige Zurverfügungstellung der Schutzfunktionen ermöglicht.

Erfindungsgemäß wird ferner ein korrespondierendes Verfahren für ein Schutzschaltgerät oder Schutzschaltsystem vorgeschlagen. Das Verfahren kann einzelne bzw. alle vorstehend bzw. nachfolgend genannte vorteilhafte Ausgestaltungen aufweisen.

Alle Ausgestaltungen, sowohl in abhängiger Form rückbezogen auf die unabhängigen Patentansprüche als auch rückbezogen lediglich auf einzelne Merkmale oder Merkmalskombinationen von Patentansprüchen, bewirken eine Verbesserung des neuartigen Schutzschaltgerätes, Schutzschaltsystems, Einzelgerätes oder Verfahrens.

Die beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, die im Zusammenhang mit der Zeichnung näher erläutert werden.

In der zugehörigen Zeichnung zeigt:
- Figur 1: ein erfindungsgemäßes Schutzschaltgerät;
- Figur 2: ein erfindungsgemäßes Schutzschaltsystem.

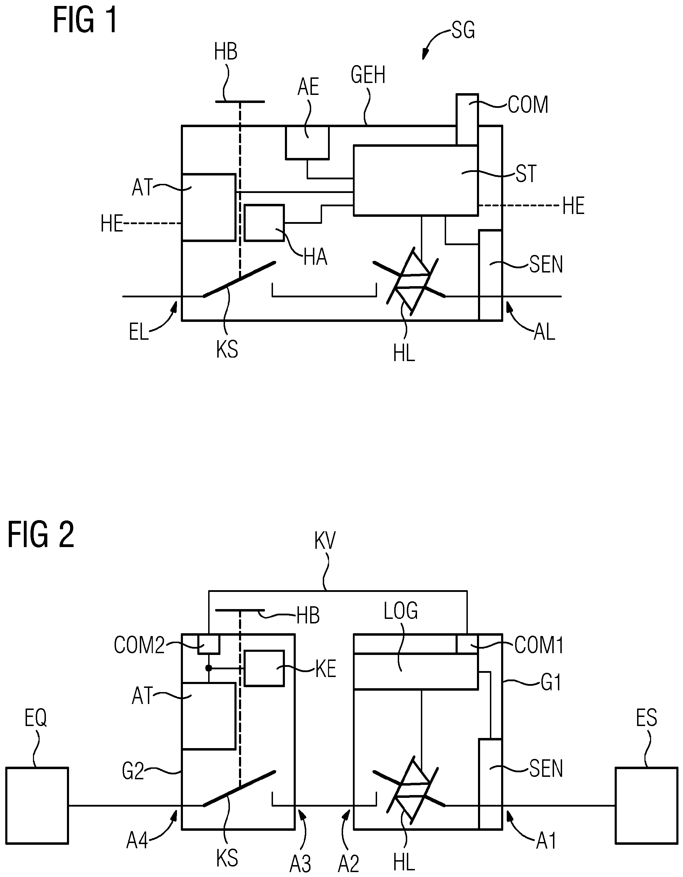

Figur 1 zeigt ein Schutzschaltgerät SG für einen Niederspannungsstromkreis, wie beispielsweise einem Dreiphasenwechselstromkreis mit drei Phasenleitern und einem Neutralleiter oder einem Einphasenwechselstromkreis mit Phasen- und Neutralleiter, mit einem Gehäuse GEH. Das Schutzschaltgerät SG weist eingangsseitige erste Leiteranschlüsse EL für den Niederspannungsstromkreis, die über eine Serienschaltung eines Trennkontaktsystems KS und eines Halbleiterschalters HL mit ausgangsseitigen zweiten Leiteranschlüssen AL verbunden sind, wobei jeweils ein eingangsseitiger Leiteranschluss EL mit einem ausgangsseitigen Leiteranschluss AL verbunden ist. Pro Verbindung (Leiter) ist ein Trennkontakt des Trennkontaktsystems KS und eine Halbleiterschalterteileinheit des Halbleiterschalters HL vorgesehen. Im Beispiel gemäß Figur 1 ist nur ein Leiter dargestellt. Die Leiteranschlüsse können derart ausgestaltet sein, dass am Gehäuse Leiter des Niederspannungsstromkreises angeschlossen werden können.

Das Trennkontaktsystem KS weist erfinderisch einen Antrieb AT auf, beispielsweise einen Motorantrieb oder Magnetantrieb, sowie eine am Gehäuse GEH (außerhalb) zugängliche (mechanische) Handhabe HB, die neben der möglichen Betätigung des Trennkontaktsystems als Anzeige für die Schaltstellung des Trennkontaktsystems KS dient (Schaltstellungsanzeige).

Am Gehäuse GEH ist eine (optische) Anzeigeeinheit AE, insbesondere für die Anzeige des Zustandes bzw. der Schaltstellung des Halbleiterschalters HL, und eine Bedieneinheit vorgesehen - im Beispiel weist die Anzeigeeinheit AE eine integrierte Bedieneinheit auf. Im Gehäuse GEH ist ein Stromsensor SEN für den Leiter vorgesehen, der die Höhe des Stromes des Niederspannungsstromkreises ermittelt; beispielsweise kann bei einem Mehrleitersystem, wie einem Dreiphasenwechselstromkreis, pro Phase (bzw. ggfs. zusätzlich für den Neutralleiter) ein Stromsensor SEN vorgesehen sein. Ferner kann ein Spannungssensor vorgesehen sein. Im Gehäuse ist eine Steuereinheit ST vorgesehen, die mit dem(den) Stromsensor(en) SEN, der Anzeigeeinheit AE (i.B. mit Bedieneinheit), dem Antrieb AT des Trennkontaktsystem KS und dem Halbleiterschalter HL verbunden ist. Ferner kann eine Kommunikationsschnittstelle COM vorgesehen sein, die ebenfalls mit der Steuereinheit ST verbunden ist. Das Trennkontaktsystem KS bzw. der Antrieb AT kann ferner einen Hilfsauslöser HA aufweisen, der ebenfalls mit der Steuereinheit ST verbunden ist. Der Hilfsauslöser (Hilfsauslösesystem) HA dient zur Betätigung des Antriebs, wenn dieser als Federspeicher ausgestaltet ist und so eine Hilfsenergie zu Betätigung benötigt.

Im Schutzschaltgerät SG kann ein Netzteil zur Energieversorgung der Steuereinheit ST vorgesehen sein. Alternativ bzw. zusätzlich kann ein (bzw. mehrere) Hilfsenergieanschluss HE (Hilfsspannungsanschluss) vorgesehen sein.

Erfindungsgemäß kann ferner eine pyrotechnische Sicherung vorgesehen sein, die in der Serienschaltung aus Trennkontaktsystem KS und Halbleiterschalter HL vorgesehen ist (davor, in der Mitte, danach).

Figur 2 zeigt eine Anordnung gemäß Figur 1, mit dem Unterschied, dass das Trennkontaktsystem und der Halbleiterschalter in unterschiedlichen Geräten mit eigenen Gehäusen angeordnet sind. Figur 2 zeigt ein dementsprechendes Schutzschaltsystem für einen Niederspannungsstromkreis, im Beispiel eingezeichnet eine Energiequelle EQ, die über das Schutzschaltsystem mit einer Energiesenke ES (Last, Verbraucher, ...) verbunden ist. Das Schutzschaltsystem weist ein erstes Gerät G1 mit einem Halbleiterschalter HL und ein zweites Gerät G2 mit einem Trennkontaktsystem KS auf, die über eine Kommunikationsverbindung KV miteinander verbunden sind.

Das erste Gerät G1 weist in einem ersten Gerätegehäuse analog zu Figur 1 eingangsseitige erste Anschlüsse A1 für den Niederspannungsstromkreis, die über den Halbleiterschalter HL mit ausgangsseitigen zweiten Anschlüssen A2 verbunden sind, auf. Einen Stromsensor SEN, der die Höhe des Stromes des Niederspannungsstromkreises ermittelt. Eine mit dem Halbleiterschalter HL und dem Stromsensor SEN verbundene Logikeinheit LOG, die wiederum mit einer ersten Kommunikationsschnittelle COM1 verbunden ist, die einen Anschluss für die Kommunikationsverbindung KV zur Verfügung stellt. Die Logikeinheit LOG ist analog zur Steuereinheit SE aufgebaut, und kann insbesondere nur die Funktionen, die für das erste Gerät benötigt werden, aufweisen.

Das zweite Gerät G2 in einem zweiten Gerätegehäuse weist analog eingangsseitige dritte Anschlüsse A3 für den Niederspannungsstromkreis, die über ein Trennkontaktsystem KS mit ausgangsseitigen vierten Anschlüssen A4 verbunden sind. Das zweite Gerät weist analog einen Antrieb AT und eine am Gehäuse zugängliche Handhabe HB für das Trennkontaktsystem KS auf. Ferner eine Kontrolleinheit KE, die analog zur Steuereinheit ST bzw. Logikeinheit LOG aufgebaut sein kann und in einer Ausgestaltung nur die Funktionen, die für das zweite Gerät G2 benötigt werden, aufweist. Die Kontrolleinheit KE ist mit dem Antrieb AT des Trennkontaktsystems KS und mit einer zweiten Kommunikationsschnittelle COM2 verbunden, die einen Anschluss für die Kommunikationsverbindung KV zur Verfügung stellt. Eine weitere Ausführung vom zweiten Gerät G2 ist ein Gerätegehäuse mit einem Trennkontaktsystem KS, einem Antrieb AT mit der zugänglichen Handhabe HB und einem Hilfsauslöser HA. Der Hilfsauslöser HA ist mittels Kommunikationsverbindung (über die auch Energie übertragen werden kann, d.h., die auch Energie bereitstellen kann) mit dem ersten Gerät G1 verbunden.

Neben der Kommunikationsverbindung KV sind die zweiten Anschlüsse A2 mit den dritten Anschlüssen A3 über eine Leitung des Niederspannungsstromkreises miteinander verbunden.

Die Kommunikationsverbindung KV kann insbesondere eine drahtgebundene Kommunikationsverbindung sein, damit eine sichere Kommunikation gewährleistet ist.

Das erste Gerät G1 oder/und das zweite Gerät G2 können eine Anzeigeeinheit oder/und eine Bedieneinheit aufweisen, beispielsweise auch als kombinierte Anzeige- und Bedieneinheit, um Platz zu sparen. Diese sind am jeweiligen Gerätegehäuse angeordnet. Diese sind ferner je nach Ausgestaltung mit der Logikeinheit LOG oder/und Kontrolleinheit KE verbunden.

Es können ferner Hilfsauslöser, Netzteile oder/und Hilfsenergieanschlüsse vorgesehen sein, analog zu Figur 1.

In einer Ausgestaltung kann der (Schalt-)Zustand des zweiten Gerätes am ersten Gerät angezeigt werden. In einer alternativen oder zusätzlichen Ausgestaltung kann der (Schalt-)Zustand des ersten Gerätes am zweiten Gerät angezeigt werden.

Erfindungsgemäß ist das neuartige Schutzschaltgerät bzw. Schutzschaltsystem bzw. Verfahren derart ausgestaltet, dass:
- bei einem Einschaltvorgang, der über die Bedieneinheit bzw. durch ein Signal über die Kommunikationsschnittstelle COM, COM1, COM2 initiierbar ist, zuerst das Trennkontaktsystem KS geschlossen wird und anschließend der Halbleiterschalter HL niederohmig wird. Bei einem manuellen ersten Ausschaltvorgang, der über die Bedieneinheit bzw. durch ein Signal über die Kommunikationsschnittstelle COM, COM1, COM2 initiierbar ist, der Halbleiterschalter HL hochohmig wird und das Trennkontaktsystem KS geschlossen bleibt. Bei einem, durch den Stromsensor SEN, ermittelten Strom, der einen ersten Stromschwellwert für eine erste Zeitspanne überschreitet, gemäß dem ersten Ausschaltvorgang der Halbleiterschalter HL hochohmig wird und das Trennkontaktsystem KS geschlossen bleibt.

Dies kann beispielsweise für den Fall einfacher Überströme, die über dem Bemessungsstrom liegen, eingesetzt werden. Bei einem (durch den Stromsensor SEN) ermittelten Strom, der einen zweiten Stromschwellwert (der höher als der erste Stromschwellwert ist) für eine zweite Zeitspanne (die gleich oder größer als die erste Zeitspanne sein kann) überschreitet, für einen zweiten Ausschaltvorgang der Halbleiterschalter (HL) hochohmig wird und anschließend das Trennkontaktsystem (KS) geöffnet wird. Dies kann beispielsweise für einen kritischen Fall von Überströmen eingesetzt werden, wobei eine galvanische Trennung vollzogen wird. Bei einem ermittelten Strom, der einen dritten Stromschwellwert (höher als der zweite Stromschwellwert) überschreitet, gemäß dem zweiten Ausschaltvorgang der Halbleiterschalter (HL) hochohmig wird und anschließend das Trennkontaktsystem (KS) geöffnet wird. Dies kann zum Beispiel bei Kurzschluss(strömen) zum Einsatz kommen, um eine schnelle Abschaltung mit galvanischer Trennung zu erreichen.

Insbesondere kann bei einem zweiten Ausschaltvorgang das geöffnete Trennkontaktsystem KS mittels einer ersten Verriegelung verriegelt werden, um ein (unbeabsichtigtes) Einschalten nach einen kritischen Über- oder Kurzschlussstrom zu verhindern.

Insbesondere kann eine Entriegelung dieser ersten Verriegelung des Trennkontaktsystems nur dann vorgenommen werden kann, wenn der Halbleiterschalter hochohmig ist, so dass ein Einschalten im (weitestgehend) stromlosen Fall erfolgt. Dies kann für den Personenschutz wichtig sein als auch für die Lebensdauer des Trennkontaktsystems KS.

Bei einem Einschaltvorgang nach dem niederohmig werden des Halbleiterschalters HL kann eine zweite Verriegelung eine manuelle Öffnung des Trennkontaktsystems verhindern, so dass ein (unbeabsichtigtes) Öffnen des unter Spannung/Strom stehenden Trennkontaktsystems verhindert wird, bei dem Lichtbögen entstehen könnten.

Insbesondere kann eine Öffnung des Trennkontaktsystems nur dann vorgenommen werden kann, wenn der Halbleiterschalter hochohmig ist.

Das Schutzschaltgerät kann eine Fehlerstromfunktion aufweisen, bei der eine Differenzstromermittlung im Niederspannungsstromkreis vorgenommen wird. Beispielsweise durch einen Summenstromwandler oder eine Differenzwertbildung gemessener Leiterströme. Bei einem Differenzstromwert, der einen Fehlerstromschwellwert überschreitet (z.B. 30 mA für den Personenschutz) kann ein zweiter Ausschaltvorgang durchgeführt werden, so dass zum Personenschutz eine galvanische Trennung vorliegt.

Über die Bedieneinheit kann ein Ein- und Ausschaltvorgang initiierbar sein. Die Anzeigeeinheit kann den Schaltzustand des Halbleiterschalters oder/und den Typ des Ausschaltvorganges anzeigen. Die Handhabe zeigt den Zustand des Trennkontaktsystems an. Die Anzeigeeinheit kann auch den Zustand des Trennkontaktsystems anzeigen. Die Anzeigeeinheit kann eine optische Anzeigeeinheit sein, z.B. mit Lampen, Lichtemitterdioden, Segmentanzeigen, (Touchscreen-)Displays, etc.

Mit niederohmig ist ein Zustand gemeint, bei dem die zulässigen Ströme fließen können. Insbesondere sind mit niederohmig Widerstandswerte gemeint, die kleiner als 10 Ohm, besser kleiner als 1 Ohm, 100 Milliohm, 10 Milliohm, 1 Milliohm, 100 Mikroohm, 10 Mikroohm, 1 Mikroohm, 100 Nanoohm, 10 Nanoohm, 1 Nanoohm oder kleiner sind.

Mit hochohmig ist ein Zustand gemeint, bei dem nur noch ein Strom vernachlässigbarer Größe fließt. Insbesondere sind mit hochohmig Widerstandswerte von größer als 1 Kiloohm, besser größer als 10 Kiloohm, 100 Kiloohm, 1 Megaohm, 10 Megaohm, 100 Megaohm, 1 Gigaohm, 10 Gigaohm, 100 Gigaohm, 1 Teraohm oder größer gemeint.

Der Halbleiterschalter kann vorteilhafterweise mit Bipolartransistoren, Feldeffekttranistoren, Thyristoren oder/und Isolated Gate Bipolartransistoren (IGBT) ausgestaltet sein.

Das Trennkontaktsystem ist vorteilhafterweise durch eine Mindestluftstrecke der geöffneten Trennkontakte in der AUS-Stellung (Geöffnet Stellung, geöffnete Kontakte) in Abhängigkeit von der Bemessungsstoßspannungsfestigkeit und dem Verschmutzungsgrad gekennzeichnet. Die Mindestluftstrecke beträgt insbesondere zwischen (im Minimum) 0,01 mm und 14 mm. Insbesondere beträgt vorteilhafterweise die Mindestluftstrecke zwischen 0,01 mm bei 0,33 kV und 14 mm bei 12 kV, insbesondere für Verschmutzungsgrad 1 sowie insbesondere für inhomogene Felder.

Vorteilhafterweise kann die Mindestluftstrecke die folgenden Werte aufweisen:
**E DIN EN 60347-1 (VDE 0660-100):2018-06**

**Tabelle 13 - Mindestluftstrecken**

| **Bemessungsstoßspannungsfestigkeit** | **Mindestluftstrecken mm** | | | | | | | |
|---|---|---|---|---|---|---|---|---|
| ***U*imp** | **Fall A inhomogenes Feld** | | | | Fall **B homogenes Feld, ideale Bedingungen** | | | |
| kV | (siehe 3.7.63) | | | | (siehe 3.7.62) | | | |
| | **Verschmutzungsgrad** | | | | **Verschmutzungsgrad** | | | |
| | **1** | **2** | **3** | **4** | **1** | **2** | **3** | **4** |
| 0,33 | 0,01 | 0,2 | 0,6 | 1,6 | 0,01 | 0,2 | 0,8 | 1,6 |
| 0,5 | 0,04 | | | | 0,04 | | | |
| 0,8 | 0,1 | | | | 0,1 | | | |
| 1,5 | 0,5 | 0,5 | | | 0,3 | 0,3 | | |
| 2,5 | 1,5 | 1,5 | 1,5 | | 0,6 | 0,6 | | |
| 4,0 | 3 | 3 | 3 | 3 | 1,2 | 1,2 | 1,2 | |
| 6,0 | 5,5 | 5,5 | 5,5 | 5,5 | 2 | 2 | 2 | 2 |
| 8,0 | 8 | 8 | 8 | 8 | 3 | 3 | 3 | 3 |
| 12 | 14 | 14 | 14 | 14 | 4,5 | 4,5 | 4,5 | 4,5 |
| ANMERKUNG Die angegebenen kleinsten Luftstrecken beruhen auf der 1,2/50-µs-Stoßspannung bei einem Luftdruck von 80 kPa, was dem Luftdruck bei 2 000 m über Nhf entspricht. | | | | | | | | |

Die Verschmutzungsgrade und Feldarten entsprechen den in den Normen definierten. Dadurch lässt vorteilhafterweise ein entsprechend der Bemessungsstoßspannungsfestigkeit dimensioniertes normgerechtes Schutzschaltgerät erzielen.

Im Folgenden soll die Erfindung noch mal mit anderen Worten erläutert und ihre Vorteile dargestellt werden.

Durch eine Steuereinheit ST (Logikeinheit LOG, Kontrolleinheit KE) im Schutzschaltgerät SG bzw. System wird gewährleistet, dass das Trennkontaktsystem KS (der Trenner) nur dann geöffnet wird, wenn ein kritischer (indizierter) Störfall vorliegt und eine sichere (galvanische) Trennung notwendig ist. Dazu kann das Trennkontaktsystem KS so verriegelt werden (erste Verriegelung), dass ein (motorisches) Einschalten des Trennkontaktsystems KS ausgeschlossen ist (z.B. durch ein Blockiersignal an den Motorantrieb). Nach einer Fehler-Klärung kann dann, z.B. durch Servicepersonal vor Ort, wieder eingeschaltet werden. Bei einem manuellen (normalen bzw. betriebsmäßigen) Schalten bleibt das Trennkontaktsystem KS geschlossen (EIN). Nur der Halbleiterschalter HL unterbricht den Strom. Ein kritischer / indizierter Störfall ist z.B. ein Kurzschluss (dritter Stromschwellwert) oder ein für die Anlage definierter kritischer Überstrom (zweiter Stromschwellwert, zweite Zeitspanne).

Ferner kann eine Verschaltung vorgesehen sein, die gewährleistet, dass vor dem Stromfluss das Trennkontaktsystems KS geschlossen ist. D.h. bevor der Halbleiterschalter HL niederohmig werden kann, muss das Trennkontaktsystem KS geschlossen sein. Damit soll verhindert werden, das Nenn- und Überströme geschaltet werden. So dass ein Verschleißen der Kontakte des Trennkontaktsystems KS vermieden wird.

Das Trennkontaktsystem KS ist so zu dimensionieren, dass dieses bis zum definierten Überstrom sicher zuhält. Der (Motor)Antrieb treibt direkt oder indirekt das Trennkontaktsystem KS. Damit kann ein Betätigen aus der Ferne, über eine Kommunikationsschnittstelle COM, möglich sein. Beispielsweise kann ein direkter Antrieb AT der Schaltachse des Trennkontaktsystems KS realisiert sein. Ebenso kann ein Auslösefederspeicher vorgesehen sein, der geladen wird.

Die Schaltstellungsanzeige des Trennkontaktsystems KS kann so aufgebaut sein, dass diese neben dem Zustand des Trennkontaktsystems KS auch den (Schalt-)Zustand des Halbleiterschalters HL anzeigt. Hierzu kann ein kleiner mechanischer Schalter vorgesehen sein, welcher eine Markierung "Ein/ Aus" bewegt. So kann z.B. Servicepersonal eindeutig den (Schalt-)Zustand des Schutzschaltgerätes SG und dessen Leiterpfades/Lastpfades erkennen, auch für den Fall, dass kein Strom im Niederspannungsstromkreis fließt.

Es kann eine Verriegelung vorgesehen sein, dass das Trennkontaktsystems KS nicht eingeschaltet werden kann, wenn der Halbleiterschalter HL nicht hochohmig (AUS) ist.

Das Trennkontaktsystems KS kann auch ein (spannbares) Kipphebelschaltschloss aufweisen. Die Auslösung kann in diesem Fall durch einen Hilfsauslöser (z.B. ein Spannungsauslöser) erfolgen, der das gespannte Schaltschloss entklinkt. Das Einschalten kann vor Ort per Handbetätigung erfolgen.

Das Schutzschaltgerät hat gegenüber dem Schutzschaltsystem den Vorteil, dass aufwendige Verdrahtungen zwischen den Geräten vermieden werden.

Das Schutzschaltgerät kann mit einer weiteren Trennvorrichtung ausgestattet werden. Diese könnte durch einen in Serie geschalteten pyrotechnischen Schalter realisiert werden. Beim Schutz von Umrichtern ist im Fehlerfall eine (ultraschnelle) Abschaltung notwendig, die im Normalfall durch den Halbleiterschalter HL realisiert wird. Legiert allerdings der Halbleiter durch, d.h. fließt Strom, obwohl eigentlich der Halbleiterschalter HL hochohmig (Aus) ist (bzw. sein sollte), so ist in diesem Fehlerfall mit der weiteren Trennvorrichtung, z.B. pyrotechnischer Schalter, eine (ultraschnelle) Abschaltung möglich. Beispielsweise wenn der Strom (für den hochohmigen Fall) einen vierten Stromschwellwert überschreitet.

Die Erfindung besteht unter anderem darin, zwei bisherige Funktionsbausteine neu zu definieren. In der klassischen elektromechanischen Schalterwelt gab es einen Leistungsschalter, welcher eine Trennung mit eindeutiger Schaltstellungsanzeige gewährleisten konnte. Ein zusätzlicher Trenner mit einem Trennkontaktsystems KS im Strompfad war zu Reparaturzwecken vorgesehen.

Soll nun elektronisch (mit einem Halbleiterschalter HL) geschaltet werden, so übernimmt der Halbleiterschalter HL mit (seiner) Steuerung die Schutzfunktion, der Trenner ist nur noch für die sichere Trennung durch ein Trennkontaktsystems KS zuständig. Der bisherige Funktionszusammenhang in einem Leistungsschalter, des Schaltens und der sicheren Trennung und der eindeutigen Schaltstellungsanzeige, ist so nicht mehr erfüllbar.

Erfindungsgemäß werden ferner die Funktionen neu auf ein oder zwei Geräte verteilt:
1. Der Halbleiterschalter übernimmt die Funktion Schalten und Schützen (incl. Signalerfassung und Verarbeitung) und ist der Master für das Trennkontaktsystem KS / den Trenner, wenn AUS geschaltet wird.
2. Der Trenner / das Trennkontaktsystem KS übernimmt die Funktion galvanische Trennung und eindeutige Schaltstellungsanzeige. Diese Funktion wird aber nicht bei jedem Schaltvorgang durchgeführt, sondern nur noch, wenn der Halbleiterschalter HL einen qualifizierten (kritischen) Fehler meldet. Normales betriebsmäßiges Schalten übernimmt nur der Halbleiterschalter HL. Der Trenner / das Trennkontaktsystem KS wird erfindungsgemäß mit einem (Motor-)Antrieb ausgestattet, welcher auch eine remotemäßige Einschaltung vornehmen kann.

Der Master beim (wieder) EIN-schalten nach einem kritischen Fehler ist der Trenner / das Trennkontaktsystem KS.

Ausgangszustand des Verfahrens: Stromkreis ist unterbrochen, Trenner ist geöffnet / AUS, Halbleiterschalter ist hochohmig.
1. Einschalten: Signal an Trenner einschalten (Kommt von Anlagensteuerung über die Kommunikationsschnittstelle COM, Bedienheit oder ähnlich über den Halbleiterschalter HL / SSCB) => Kontakte werden geschlossen => Freigabesignal an Halbleiterschalter HL => Schaltet EIN => Anzeige das Halbleiterschalter eingeschaltet ist (EIN) und auch die Handhabe des Trennkontaktsystems KS ist EIN.
2. Betriebsmäßiges Ein -, Ausschalten; Logische Abfolge:
   a) Betriebsströme schalten, kleine Überstrome abschalten, Trenner ist in EIN (geschlossen).
      Halbleiterschalter schaltet je nach Anforderung Ein bzw. AUS => kein Signal an Trenner zum Ausschalten => Signalanzeige des Halbleiterschalters ist Ein bzw. AUS.
   b) Fehler abschalten, welche eine sichere Trennung erfordern. Logische Abfolge:
      Halbleiterschalter schaltet ab => Ausschaltsignal an Trenner => Trenner / Trennkontaktsystems KS öffnet Kontakte (schaltet AUS) => Trenner / Trennkontaktsystem KS wird verriegelt, damit nicht wieder einschaltbar => parallel Signal an Anzeigeeinheit AE des Halbleiterschalter (und Trennkontaktsystems): AUS
      => Trenner Schaltstellungsanzeige in Ausgelöst bzw. AUS.
3. Ausschalten, Reparaturfall; Logische Abfolge:
   Anlage wird durch den Halbleiterschalter HL abgeschaltet => Anzeige für den Halbleiterschalter AUS => ggf. Verriegelung für Trennkontaktsystem KS aufheben, => Trennkontaktsystem KS kann geöffnet werden (Trenner kann ausgeschaltet werden) => Schaltstellungsanzeige Trennkontaktsystems AUS => ggf. Verriegelungssignal für Halbleiterschalter HL, damit dieser nicht einschaltbar ist.
4. Einschalten nach Fehlerfall; Logische Abfolge:
   Fehler beseitigen => Trenner entriegeln => Nur entriegelbar wenn Halbleiterschalter HL hochohmig / AUS ist => Trenner / Trennkontaktsystem KS nach EIN einschalten => Freigabesignal an Halbleiterschalter HL => Halbleiterschalter HL ist einschaltbar.

Obwohl die Erfindung im Detail durch das Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der angefügten Ansprüche zu verlassen.

## Patentansprüche

1. Schutzschaltgerät (SG) für einen Niederspannungsstromkreis, aufweisend in einem Gehäuse (GEH):
- eingangsseitige erste Leiteranschlüsse (EL) für den Niederspannungsstromkreis, die über eine Serienschaltung eines Trennkontaktsystems (KS) und eines Halbleiterschalters (HL) mit ausgangsseitigen zweiten Leiteranschlüssen (AL) verbunden sind,
- ein Antrieb (AT) und eine am Gehäuse zugängliche Handhabe (HB) für das Trennkontaktsystem (KS),
- eine Anzeigeeinheit (AE) und eine Bedieneinheit am Gehäuse (GEH),
- ein Stromsensor (SEN), der die Höhe des Stromes des Niederspannungsstromkreises ermittelt,
- eine Steuereinheit (ST), die mit dem Stromsensor (SEN), der Anzeigeeinheit (AE), der Bedieneinheit, dem Antrieb (AT) des Trennkontaktsystem (KS) und dem Halbleiterschalter (HL) verbunden ist, **dadurch gekennzeichnet, dass**
das Trennkontaktsystem eine Trennereigenschaft aufweist, wobei die Steuereinheit (ST) derart ausgestaltet ist, dass:
- bei einem Einschaltvorgang zuerst das Trennkontaktsystem (KS) geschlossen wird und anschließend der Halbleiterschalter (HL) niederohmig wird,
- bei einem manuellen ersten Ausschaltvorgang der Halbleiterschalter (HL) hochohmig wird und das Trennkontaktsystem (KS) geschlossen bleibt,
- bei einem ermittelten Strom, der einen ersten Stromschwellwert für eine erste Zeitspanne überschreitet, gemäß dem ersten Ausschaltvorgang der Halbleiterschalter (HL) hochohmig wird und das Trennkontaktsystem (KS) geschlossen bleibt,
- bei einem ermittelten Strom, der einen zweiten Stromschwellwert für eine zweite Zeitspanne überschreitet, für einen zweiten Ausschaltvorgang der Halbleiterschalter (HL) hochohmig wird und anschließend das Trennkontaktsystem (KS) geöffnet wird,
- bei einem ermittelten Strom, der einen dritten Stromschwellwert überschreitet, gemäß dem zweiten Ausschaltvorgang der Halbleiterschalter (HL) hochohmig wird und anschließend das Trennkontaktsystem (KS) geöffnet wird.

2. Schutzschaltgerät (SG) nach Patentanspruch 1,
**dadurch gekennzeichnet,**
**dass** bei einem zweiten Ausschaltvorgang das geöffnete Trennkontaktsystem (KS) mittels einer ersten Verriegelung verriegelt wird.

3. Schutzschaltgerät (SG) nach Patentanspruch 2,
**dadurch gekennzeichnet,**
**dass** eine Entriegelung der ersten Verriegelung des Trennkontaktsystems (KS) nur dann vorgenommen werden kann, wenn der Halbleiterschalter (HL) hochohmig ist.

4. Schutzschaltgerät (SG) nach Patentanspruch 1, 2 oder 3,
**dadurch gekennzeichnet,**
**dass** bei einem Einschaltvorgang nach dem niederohmig werden des Halbleiterschalters (HL) eine zweite Verriegelung eine manuelle Öffnung des Trennkontaktsystems (KS) verhindert.

5. Schutzschaltgerät (SG) nach einem der vorhergehenden Patentansprüche,
**dadurch gekennzeichnet,**
**dass** eine Öffnung des Trennkontaktsystems (KS) nur dann vorgenommen werden kann, wenn der Halbleiterschalter (HL) hochohmig ist.

6. Schutzschaltgerät (SG) nach einem der vorhergehenden Patentansprüche,
**dadurch gekennzeichnet,**
**dass** eine Differenzstromermittlung im Niederspannungsstromkreis vornehmbar ist,
**dass** bei einem Differenzstromwert, der einen Fehlerstromschwellwert überschreitet, ein zweiter Ausschaltvorgang durchgeführt wird.

7. Schutzschaltgerät (SG) nach einem der vorhergehenden Patentansprüche,
**dadurch gekennzeichnet,**
**dass** über die Bedieneinheit ein Ein- und Ausschaltvorgang initiierbar ist.

8. Schutzschaltgerät (SG) nach einem der vorhergehenden Patentansprüche,
**dadurch gekennzeichnet,**
**dass** die Anzeigeeinheit (AE) den Schaltzustand des Halbleiterschalters (HL) oder/und den Typ des Ausschaltvorganges anzeigt.

9. Schutzschaltgerät (SG) nach einem der vorhergehenden Patentansprüche,
**dadurch gekennzeichnet,**
**dass** die Handhabe (HB) den Zustand des Trennkontaktsystems (KS) anzeigt.

10. Schutzschaltgerät (SG) nach einem der vorhergehenden Patentansprüche,
**dadurch gekennzeichnet,**
**dass** die Anzeigeeinheit (AE) auch den Zustand des Trennkontaktsystems (KS) anzeigt.

11. Schutzschaltgerät (SG) nach einem der vorhergehenden Patentansprüche,
**dadurch gekennzeichnet,**
**dass** der Antrieb (AT) ein Motorantrieb oder Magnetantrieb ist oder einen Federspeicher aufweist.

12. Schutzschaltgerät (SG) nach einem der vorhergehenden Patentansprüche,
**dadurch gekennzeichnet,**
**dass** eine Kommunikationsschnittstelle (COM) vorgesehen ist, die insbesondere mit der Steuereinheit (ST) verbunden ist.

13. Schutzschaltgerät (SG) nach einem der vorhergehenden Patentansprüche,
**dadurch gekennzeichnet,**
**dass** ein Spannungssensor zur Ermittlung der Höhe der Spannung des Niederspannungsstromkreises vorgesehen ist, der insbesondere mit der Steuereinheit (ST) verbunden ist.

14. Schutzschaltgerät (SG) nach einem der vorhergehenden Patentansprüche,
**dadurch gekennzeichnet,**
**dass** ein Netzteil vorgesehen ist, dass einerseits Energie aus dem Niederspannungsstromkreis bezieht und andererseits mit der Steuereinheit (ST) verbunden ist.

15. Schutzschaltgerät (SG) nach einem der vorhergehenden Patentansprüche,
**dadurch gekennzeichnet,**
**dass** eine Hilfsenergieanschluss (HE), insbesondere Hilfsspannungsanschluss, insbesondere zur Energieversorgung der Steuereinheit (ST) vorgesehen ist.

16. Schutzschaltgerät (SG) nach einem der vorhergehenden Patentansprüche,
**dadurch gekennzeichnet,**
**dass** die Anzeigeeinheit (AE) eine optische Anzeigeeinheit ist, die insbesondere Lichtemitterdioden aufweist.

17. Schutzschaltsystem für einen Niederspannungsstromkreis, aufweisend ein erstes Gerät (G1) mit einem Halbleiterschalter (HL) und ein zweites Gerät (G2) mit einem Trennkontaktsystem (KS), die über eine Kommunikationsverbindung (KV) miteinander verbunden sind,
dass das erste Gerät (G1) in einem ersten Gerätegehäuse:
- eingangsseitige erste Anschlüsse (A1) für den Niederspannungsstromkreis, die über den Halbleiterschalter (HL) mit ausgangsseitigen zweiten Anschlüssen (A2) verbunden sind,
- ein Stromsensor (SEN), der die Höhe des Stromes des Niederspannungsstromkreises ermittelt,
- eine mit dem Halbleiterschalter (HL) und dem Stromsensor (SEN) verbundene Logikeinheit (LOG), die wiederum mit einer ersten Kommunikationsschnittstelle (COM1) verbunden ist, die einen Anschluss für die Kommunikationsverbindung (KV) zur Verfügung stellt,
dass das zweite Gerät (G2) in einem zweiten Gerätegehäuse:
- eingangsseitige dritte Anschlüsse (A3) für den Niederspannungsstromkreis, die über ein Trennkontaktsystem (KS) mit ausgangsseitigen vierten Anschlüssen (A4) verbunden sind,
- ein Antrieb (AT) und eine am Gehäuse zugängliche Handhabe (HB) für das Trennkontaktsystem (KS),
- eine Kontrolleinheit (KE), die mit dem Antrieb (AT) des Trennkontaktsystems (KS) und mit einer zweiten Kommunikationsschnittelle (COM2) verbunden ist, die einen Anschluss für die Kommunikationsverbindung (KV) zur Verfügung stellt, verbunden ist,
dass die zweiten Anschlüsse (A2) mit den dritten Anschlüssen (A3) über eine Leitung des Niederspannungsstromkreises miteinander verbunden sind und dass das System derart ausgestaltet ist, dass:
- bei einem Einschaltvorgang zuerst das Trennkontaktsystem (KS) geschlossen wird und anschließend der Halbleiterschalter (HL) niederohmig wird,
- bei einem manuellen ersten Ausschaltvorgang der Halbleiterschalter (HL) hochohmig wird und das Trennkontaktsystem (KS) geschlossen bleibt,
- bei einem ermittelten Strom, der einen ersten Stromschwellwert für eine erste Zeitspanne überschreitet, gemäß dem ersten Ausschaltvorgang der Halbleiterschalter (HL) hochohmig wird und das Trennkontaktsystem (KS) geschlossen bleibt,
- bei einem ermittelten Strom, der einen zweiten Stromschwellwert für eine zweite Zeitspanne überschreitet, für einen zweiten Ausschaltvorgang der Halbleiterschalter (HL) hochohmig wird und anschließend das Trennkontaktsystem (KS) geöffnet wird,
- bei einem ermittelten Strom, der einen dritten Stromschwellwert überschreitet, gemäß dem zweiten Ausschaltvorgang der Halbleiterschalter (HL) hochohmig wird und anschließend das Trennkontaktsystem (KS) geöffnet wird.

18. Schutzschaltsystem nach Patentanspruch 17,
**dadurch gekennzeichnet,**
**dass** die Kommunikationsverbindung (KV) eine drahtgebundene Kommunikationsverbindung ist.

19. Schutzschaltsystem nach Patentanspruch 17 oder 18,
**dadurch gekennzeichnet,**
**dass** das erste Gerät (G1) eine Anzeigeeinheit (AE) und eine Bedieneinheit am ersten Gerätegehäuse aufweist, die mit der Logikeinheit (LOG) verbunden ist, insbesondere dass das zweite Gerät (G2) eine weitere Anzeige- oder Bedieneinheit am zweiten Gerätegehäuse aufweist.

20. Gerät (G1) mit einem Halbleiterschalter (HL) nach einem der vorhergehenden Patentansprüche 17, 18 oder 19.

21. Gerät (G2) mit einem Trennkontaktsystem (KS) nach einem der vorhergehenden Patentansprüche 17, 18 oder 19.

22. Verfahren für ein Schutzschaltgerät (SG) oder Schutzschaltsystem mit einer Serienschaltung eines Halbleiterschalters (HL) und eines Trennkontaktsystems (KS) für einen Niederspannungsstromkreises, bei dem eine Ermittlung der Höhe des Stromes vorgenommen wird, bei dem:
- bei einem Einschaltvorgang zuerst das Trennkontaktsystem (KS) geschlossen wird und anschließend der Halbleiterschalter (HL) niederohmig wird,
- bei einem manuellen ersten Ausschaltvorgang der Halbleiterschalter (HL) hochohmig wird und das Trennkontaktsystem (KS) geschlossen bleibt,
- bei einem ermittelten Strom, der einen ersten Stromschwellwert für eine erste Zeitspanne überschreitet, gemäß dem ersten Ausschaltvorgang der Halbleiterschalter (HL) hochohmig wird und das Trennkontaktsystem (KS) geschlossen bleibt,
- bei einem ermittelten Strom, der einen zweiten Stromschwellwert für eine zweite Zeitspanne überschreitet, für einen zweiten Ausschaltvorgang der Halbleiterschalter (HL) hochohmig wird und anschließend das Trennkontaktsystem (KS) geöffnet wird,
- bei einem ermittelten Strom, der einen dritten Stromschwellwert überschreitet, gemäß dem zweiten Ausschaltvorgang der Halbleiterschalter (HL) hochohmig wird und anschließend das Trennkontaktsystem (KS) geöffnet wird.

## Claims

1. Circuit breaker device (SG) for a low-voltage circuit, comprising in a housing (GEH):
- input-side first conductor connections (EL) for the low-voltage circuit, which are connected to output-side second conductor connections (AL) via a series circuit composed of an isolating contact system (KS) and a semiconductor switch (HL),
- a drive (AT) and a handle (HB) for the isolating contact system (KS), which handle is accessible on the housing,
- a display unit (AE) and an operating unit on the housing (GEH),
- a current sensor (SEN), which determines the level of the current of the low-voltage circuit,
- a control unit (ST), which is connected to the current sensor (SEN), the display unit (AE), the operating unit, the drive (AT) of the isolating contact system (KS) and the semiconductor switch (HL), **characterized in that** the isolating contact system has an isolating property, wherein the control unit (ST) is configured in such a way that:
- in a switch-on process, first the isolating contact system (KS) is closed and then the semiconductor switch (HL) becomes low-impedance,
- in a manual first switch-off process, the semiconductor switch (HL) becomes high-impedance and the isolating contact system (KS) remains closed,
- in the case of a determined current that exceeds a first current threshold value for a first time period, according to the first switch-off process, the semiconductor switch (HL) becomes high-impedance and the isolating contact system (KS) remains closed,
- in the case of a determined current that exceeds a second current threshold value for a second time period, for a second switch-off process, the semiconductor switch (HL) becomes high-impedance and then the isolating contact system (KS) is opened,
- in the case of a determined current that exceeds a third current threshold value, according to the second switch-off process, the semiconductor switch (HL) becomes high-impedance and then the isolating contact system (KS) is opened.

2. Circuit breaker device (SG) according to Patent Claim 1,
**characterized**
**in that** in a second switch-off process, the open isolating contact system (KS) is locked by means of a first locking procedure.

3. Circuit breaker device (SG) according to Patent Claim 2,
**characterized**
**in that** an unlocking procedure of the first locking procedure of the isolating contact system (KS) can be performed only when the semiconductor switch (HL) is high-impedance.

4. Circuit breaker device (SG) according to Patent Claim 1, 2 or 3,
**characterized**
**in that** in a switch-on process, after the semiconductor switch (HL) has become low-impedance, a second locking procedure prevents manual opening of the isolating contact system (KS).

5. Circuit breaker device (SG) according to one of the preceding patent claims,
**characterized**
**in that** opening of the isolating contact system (KS) can be performed only when the semiconductor switch (HL) is high-impedance.

6. Circuit breaker device (SG) according to one of the preceding patent claims,
**characterized**
**in that** it is possible to perform a differential current determination in the low-voltage circuit,
**in that** a second switch-off process is carried out in the case of a differential current value that exceeds a residual current threshold value.

7. Circuit breaker device (SG) according to one of the preceding patent claims,
**characterized**
**in that** a switch-on and switch-off process can be initiated by means of the operating unit.

8. Circuit breaker device (SG) according to one of the preceding patent claims,
**characterized**
**in that** the display unit (AE) displays the switching state of the semiconductor switch (HL) or/and the type of switch-off process.

9. Circuit breaker device (SG) according to one of the preceding patent claims,
**characterized**
**in that** the handle (HB) displays the state of the isolating contact system (KS).

10. Circuit breaker device (SG) according to one of the preceding patent claims,
**characterized**
**in that** the display unit (AE) also displays the state of the isolating contact system (KS).

11. Circuit breaker device (SG) according to one of the preceding patent claims,
**characterized**
**in that** the drive (AT) is a motor drive or solenoid drive or comprises a spring energy store.

12. Circuit breaker device (SG) according to one of the preceding patent claims,
**characterized**
**in that** a communication interface (COM) is provided, which is connected in particular to the control unit (ST).

13. Circuit breaker device (SG) according to one of the preceding patent claims,
**characterized**
**in that** a voltage sensor for determining the level of the voltage of the low-voltage circuit is provided, which voltage sensor is connected in particular to the control unit (ST).

14. Circuit breaker device (SG) according to one of the preceding patent claims,
**characterized**
**in that** a power supply unit is provided, one side of which draws energy from the low-voltage circuit and the other side of which is connected to the control unit (ST).

15. Circuit breaker device (SG) according to one of the preceding patent claims,
**characterized**
**in that** an auxiliary energy connection (HE), in particular auxiliary voltage connection, is provided in particular to supply energy to the control unit (ST).

16. Circuit breaker device (SG) according to one of the preceding patent claims,
**characterized**
**in that** the display unit (AE) is an optical display unit, which comprises in particular light-emitting diodes.

17. Circuit breaker system for a low-voltage circuit, having a first device (G1) comprising a semiconductor switch (HL) and a second device (G2) comprising an isolating contact system (KS), which devices are connected to one another via a communication link (KV),
in that the first device (G1) comprises in a first device housing:
- input-side first connections (A1) for the low-voltage circuit, which are connected to output-side second connections (A2) via the semiconductor switch (HL),
- a current sensor (SEN), which determines the level of the current of the low-voltage circuit,
- a logic unit (LOG), which is connected to the semiconductor switch (HL) and the current sensor (SEN) and which is connected in turn to a first communication interface (COM1), which provides a connection for the communication link (KV),
in that the second device (G2) comprises in a second device housing:
- input-side third connections (A3) for the low-voltage circuit, which are connected to output-side fourth connections (A4) via an isolating contact system (KS),
- a drive (AT) and a handle (HB) for the isolating contact system (KS), which handle is accessible on the housing,
- a monitoring unit (KE), which is connected to the drive (AT) of the isolating contact system (KS) and to a second communication interface (COM2), which provides a connection for the communication link (KV),
in that the second connections (A2) are connected to the third connections (A3) via a line of the low-voltage circuit and in that the system is configured in such a way that:
- in a switch-on process, first the isolating contact system (KS) is closed and then the semiconductor switch (HL) becomes low-impedance,
- in a manual first switch-off process, the semiconductor switch (HL) becomes high-impedance and the isolating contact system (KS) remains closed,
- in the case of a determined current that exceeds a first current threshold value for a first time period, according to the first switch-off process, the semiconductor switch (HL) becomes high-impedance and the isolating contact system (KS) remains closed,
- in the case of a determined current that exceeds a second current threshold value for a second time period, for a second switch-off process, the semiconductor switch (HL) becomes high-impedance and then the isolating contact system (KS) is opened,
- in the case of a determined current that exceeds a third current threshold value, according to the second switch-off process, the semiconductor switch (HL) becomes high-impedance and then the isolating contact system (KS) is opened.

18. Circuit breaker system according to Patent Claim 17,
**characterized**
**in that** the communication link (KV) is a wired communication link.

19. Circuit breaker system according to Patent Claim 17 or 18,
**characterized**
**in that** the first device (G1) comprises a display unit (AE) and an operating unit on the first device housing, which operating unit is connected to the logic unit (LOG), in particular in that the second device (G2) comprises a further display or operating unit on the second device housing.

20. Device (G1) comprising a semiconductor switch (HL) according to one of the preceding Patent Claims 17, 18 or 19.

21. Device (G2) comprising an isolating contact system (KS) according to one of the preceding Patent Claims 17, 18 or 19.

22. Method for a circuit breaker device (SG) or circuit breaker system comprising a series circuit composed of a semiconductor switch (HL) and an isolating contact system (KS) for a low-voltage circuit, in which the level of the current is determined, in which method:
- in a switch-on process, first the isolating contact system (KS) is closed and then the semiconductor switch (HL) becomes low-impedance,
- in a manual first switch-off process, the semiconductor switch (HL) becomes high-impedance and the isolating contact system (KS) remains closed,
- in the case of a determined current that exceeds a first current threshold value for a first time period, according to the first switch-off process, the semiconductor switch (HL) becomes high-impedance and the isolating contact system (KS) remains closed,
- in the case of a determined current that exceeds a second current threshold value for a second time period, for a second switch-off process, the semiconductor switch (HL) becomes high-impedance and then the isolating contact system (KS) is opened,
- in the case of a determined current that exceeds a third current threshold value, according to the second switch-off process, the semiconductor switch (HL) becomes high-impedance and then the isolating contact system (KS) is opened.

## Revendications

1. Appareil de commutation de protection (SG) pour circuit électrique basse tension, comprenant, dans un boîtier (GEH) :
- des premières connexions pour conducteurs (EL), côté entrée, pour le circuit électrique basse tension, qui sont reliées à des deuxièmes connexions pour conducteurs (AL), côté sortie, par le biais d'un circuit série formé d'un système de contacts de sectionnement (KS) et d'un commutateur à semi-conducteur (HL),
- un entraînement (AT) et une manette (HB), accessible sur le boîtier, pour le système de contacts de sectionnement (KS),
- une unité d'affichage (AE) et une unité de manoeuvre sur le boîtier (GEH),
- un capteur de courant (SEN) qui détermine l'intensité du courant du circuit électrique basse tension,
- une unité de commande (ST) qui est reliée au capteur de courant (SEN), à l'unité d'affichage (AE), à l'unité de manoeuvre, à l'entraînement (AT) du système de contacts de sectionnement (KS) et au commutateur à semi-conducteur (HL),
**caractérisé en ce que** le système de contacts de sectionnement présente une propriété de sectionnement, l'unité de commande (ST) étant réalisée de telle sorte que :
- lors d'une opération d'enclenchement, le système de contacts de sectionnement (KS) est d'abord fermé et le commutateur à semi-conducteur (HL) passe ensuite dans un état de basse impédance,
- lors d'une première opération de déclenchement manuel, le commutateur à semi-conducteur (HL) passe dans un état de haute impédance et le système de contacts de sectionnement (KS) reste fermé,
- dans le cas d'un courant déterminé qui dépasse une première valeur seuil de courant pendant une première plage de temps, le commutateur à semi-conducteur (HL) passe dans un état de haute impédance et le système de contacts de sectionnement (KS) reste fermé conformément à la première opération de déclenchement,
- dans le cas d'un courant déterminé qui dépasse une deuxième valeur seuil de courant pendant une deuxième plage de temps, le commutateur à semi-conducteur (HL) passe dans un état de haute impédance et le système de contacts de sectionnement (KS) est ensuite ouvert pour une deuxième opération de déclenchement,
- dans le cas d'un courant déterminé qui dépasse une troisième valeur seuil de courant, le commutateur à semi-conducteur (HL) passe dans un état de haute impédance et le système de contacts de sectionnement (KS) est ensuite ouvert conformément à la deuxième opération de déclenchement.

2. Appareil de commutation de protection (SG) selon la revendication 1,
**caractérisé en ce que**, lors d'une deuxième opération de déclenchement, le système de contacts de sectionnement (KS) ouvert est verrouillé au moyen d'un premier verrouillage.

3. Appareil de commutation de protection (SG) selon la revendication 2,
**caractérisé en ce qu'**il est possible de procéder à un déverrouillage du premier verrouillage du système de contacts de sectionnement (KS) uniquement lorsque le commutateur à semi-conducteur (HL) se trouve dans l'état de haute impédance.

4. Appareil de commutation de protection (SG) selon la revendication 1, 2 ou 3,
**caractérisé en ce que**, lors d'une opération d'enclenchement survenant après le passage du commutateur à semi-conducteur (HL) dans l'état de basse impédance, un deuxième verrouillage empêche une ouverture manuelle du système de contacts de sectionnement (KS).

5. Appareil de commutation de protection (SG) selon l'une des revendications précédentes,
**caractérisé en ce qu'**il est possible de procéder à une ouverture du système de contacts de sectionnement (KS) uniquement lorsque le commutateur à semi-conducteur (HL) se trouve dans l'état de haute impédance.

6. Appareil de commutation de protection (SG) selon l'une des revendications précédentes,
**caractérisé en ce qu'**il est possible de procéder à une détermination du courant différentiel dans le circuit électrique basse tension,
**en ce qu'**une deuxième opération de déclenchement est exécutée en cas de valeur de courant différentiel dépassant une valeur seuil de courant de défaut.

7. Appareil de commutation de protection (SG) selon l'une des revendications précédentes,
**caractérisé en ce qu'**il est possible d'initier une opération d'enclenchement et de déclenchement par le biais de l'unité de manoeuvre.

8. Appareil de commutation de protection (SG) selon l'une des revendications précédentes,
**caractérisé en ce que** l'unité d'affichage (AE) indique l'état de commutation du commutateur à semi-conducteur (HL) et/ou le type d'opération de déclenchement.

9. Appareil de commutation de protection (SG) selon l'une des revendications précédentes,
**caractérisé en ce que** la manette (HB) indique l'état du système de contacts de sectionnement (KS).

10. Appareil de commutation de protection (SG) selon l'une des revendications précédentes,
**caractérisé en ce que** l'unité d'affichage (AE) indique également l'état du système de contacts de sectionnement (KS).

11. Appareil de commutation de protection (SG) selon l'une des revendications précédentes,
**caractérisé en ce que** l'entraînement (AT) est un entraînement motorisé ou un entraînement magnétique ou comprend un accumulateur à ressort.

12. Appareil de commutation de protection (SG) selon l'une des revendications précédentes,
**caractérisé en ce que** l'on prévoit une interface de communication (COM) qui est reliée, notamment, à l'unité de commande (ST).

13. Appareil de commutation de protection (SG) selon l'une des revendications précédentes,
**caractérisé en ce que** l'on prévoit un capteur de tension destiné à déterminer la grandeur de la tension du circuit électrique basse tension, qui est relié, notamment, à l'unité de commande (ST).

14. Appareil de commutation de protection (SG) selon l'une des revendications précédentes,
**caractérisé en ce que** l'on prévoit un bloc d'alimentation qui, d'une part, est alimenté en énergie par le circuit électrique basse tension et, d'autre part, est relié à l'unité de commande (ST).

15. Appareil de commutation de protection (SG) selon l'une des revendications précédentes,
**caractérisé en ce que** l'on prévoit une connexion pour énergie auxiliaire (HE), notamment une connexion pour tension auxiliaire, en particulier pour l'alimentation en énergie de l'unité de commande (ST).

16. Appareil de commutation de protection (SG) selon l'une des revendications précédentes,
**caractérisé en ce que** l'unité d'affichage (AE) est une unité d'affichage optique qui comprend notamment des diodes électroluminescentes.

17. Système de commutation de protection pour circuit électrique basse tension, comprenant un premier appareil (G1) qui comprend un commutateur à semi-conducteur (HL) et un deuxième appareil (G2) qui comprend un système de contacts de sectionnement (KS), qui sont reliés l'un à l'autre par une liaison de communication (KV), **caractérisé**
**en ce que** le premier appareil (G1) comprend, dans un premier boîtier d'appareil :
- des premières connexions (A1), côté entrée, pour le circuit électrique basse tension, qui sont reliées à des deuxièmes connexions (A2), côté sortie, par le biais du commutateur à semi-conducteur (HL),
- un capteur de courant (SEN) qui détermine l'intensité du courant du circuit électrique basse tension,
- une unité logique (LOG) reliée au commutateur à semi-conducteur (HL) et au capteur de courant (SEN), qui est reliée à son tour à une première interface de communication (COM1) qui fournit une connexion pour la liaison de communication (KV),
**en ce que** le deuxième appareil (G2) comprend, dans un deuxième boîtier d'appareil :
- des troisièmes connexions (A3), côté entrée, pour le circuit électrique basse tension, qui sont reliées à des quatrièmes connexions (A4), côté sortie, par le biais d'un système de contacts de sectionnement (KS),
- un entraînement (AT) et une manette (HB), accessible sur le boîtier, pour le système de contacts de sectionnement (KS),
- une unité de contrôle (KE) qui est reliée à l'entraînement (AT) du système de contacts de sectionnement (KS) et à une deuxième interface de communication (COM2) qui fournit une connexion pour la liaison de communication,
**en ce que** les deuxièmes connexions (A2) sont reliées aux troisièmes connexions (A3) par le biais d'une ligne du circuit électrique basse tension et en ce que le système est réalisé de telle sorte que :
- lors d'une opération d'enclenchement, le système de contacts de sectionnement (KS) est d'abord fermé et le commutateur à semi-conducteur (HL) passe ensuite dans un état de basse impédance,
- lors d'une première opération de déclenchement manuel, le commutateur à semi-conducteur (HL) passe dans un état de haute impédance et le système de contacts de sectionnement (KS) reste fermé,
- dans le cas d'un courant déterminé qui dépasse une première valeur seuil de courant pendant une première plage de temps, le commutateur à semi-conducteur (HL) passe dans un état de haute impédance et le système de contacts de sectionnement (KS) reste fermé conformément à la première opération de déclenchement,
- dans le cas d'un courant déterminé qui dépasse une deuxième valeur seuil de courant pendant une deuxième plage de temps, le commutateur à semi-conducteur (HL) passe dans un état de haute impédance et le système de contacts de sectionnement (KS) est ensuite ouvert pour une deuxième opération de déclenchement,
- dans le cas d'un courant déterminé qui dépasse une troisième valeur seuil de courant, le commutateur à semi-conducteur (HL) passe dans un état de haute impédance et le système de contacts de sectionnement (KS) est ensuite ouvert conformément à la deuxième opération de déclenchement.

18. Système de commutation de protection selon la revendication 17,
**caractérisé en ce que** la liaison de communication (KV) est une liaison communication par fil.

19. Système de commutation de protection selon la revendication 17 ou 18,
**caractérisé en ce que** le premier appareil (G1) comprend une unité d'affichage (AE) et une unité de manoeuvre sur le premier boîtier d'appareil, qui est reliée à l'unité logique (LOG), notamment **en ce que** le deuxième appareil (G2) comprend une autre unité d'affichage ou de manoeuvre sur le deuxième boîtier d'appareil.

20. Appareil (G1) comprenant un commutateur à semi-conducteur (HL) selon l'une des revendications précédentes 17, 18 ou 19.

21. Appareil (G2) comprenant un système de contacts de sectionnement (KS) selon l'une des revendications précédentes 17, 18 ou 19.

22. Procédé pour un appareil de commutation de protection (SG) ou système de commutation de protection comprenant un circuit série formé d'un commutateur à semi-conducteur (HL) et d'un système de contacts de sectionnement (KS) pour un circuit électrique basse tension, dans lequel il est procédé à une détermination de l'intensité du courant, dans lequel :
- lors d'une opération d'enclenchement, le système de contacts de sectionnement (KS) est d'abord fermé et le commutateur à semi-conducteur (HL) passe ensuite dans un état de basse impédance,
- lors d'une première opération de déclenchement manuel, le commutateur à semi-conducteur (HL) passe dans un état de haute impédance et le système de contacts de sectionnement (KS) reste fermé,
- dans le cas d'un courant déterminé qui dépasse une première valeur seuil de courant pendant une première plage de temps, le commutateur à semi-conducteur (HL) passe dans un état de haute impédance et le système de contacts de sectionnement (KS) reste fermé conformément à la première opération de déclenchement,
- dans le cas d'un courant déterminé qui dépasse une deuxième valeur seuil de courant pendant une deuxième plage de temps, le commutateur à semi-conducteur (HL) passe dans un état de haute impédance et le système de contacts de sectionnement (KS) est ensuite ouvert pour une deuxième opération de déclenchement,
- dans le cas d'un courant déterminé qui dépasse une troisième valeur seuil de courant, le commutateur à semi-conducteur (HL) passe dans un état de haute impédance et le système de contacts de sectionnement (KS) est ensuite ouvert conformément à la deuxième opération de déclenchement.
